# EUROPÄISCHE PATENTSCHRIFT

(11) **EP 2 741 886 B1**
(45) Veröffentlichungstag und Bekanntmachung des Hinweises auf die Patenterteilung: **20.09.2017**
(21) Anmeldenummer: 12745776.0
(22) Anmeldetag: 26.07.2012
(51) Int. Cl.: B23K 20/12, B21J 5/06, B21J 15/02

(54) **VERBINDUNG ZUMINDEST ZWEIER ANEINANDER ANLIEGENDER BAUTEILE MITTELS EINES STIFFÖRMIGEN VERBINDUNGSELEMENTES DURCH REIBSCHWEISSEN**
CONNECTION OF AT LEAST TWO COMPONENTS RESTING AGAINST ONE ANOTHER BY MEANS OF A PIN-LIKE CONNECTING ELEMENT BY FRICTION WELDING
ASSEMBLAGE D'AU MOINS DEUX PIÈCES APPLIQUÉES L'UNE CONTRE L'AUTRE AU MOYEN D'UN ÉLÉMENT D'ASSEMBLAGE EN FORME DE TIGE, PAR SOUDAGE PAR FRICTION

(30) Priorität: 08.08.2011 DE 102011109805
(43) Veröffentlichungstag der Anmeldung: 18.06.2014
(73) Patentinhaber: Volkswagen Aktiengesellschaft, 38440 Wolfsburg (DE)
(72) Erfinder: AMEDICK, Jürgen, 31228 Peine (DE); SCHÜBELER, Christian, 38527 Abbesbüttel (DE)
(86) Internationale Anmeldenummer: PCT/EP2012/003166
(87) Internationale Veröffentlichungsnummer: WO 2013/020659

(56) Entgegenhaltungen:
- DE-A1- 19 740 022
- DE-A1-102007 030 806
- US-A- 2 957 237
- US-A- 3 562 467
- US-A1- 2003 192 940
- US-A1- 2008 160 337

## Beschreibung

Die vorliegende Erfindung betrifft eine Verbindung zumindest zweier aneinander anliegender Bauteile mittels eines stiftförmigen Verbindungselements gemäß dem Oberbegriff des Patentanspruchs 1.

Eine derartige Verbindung ist aus der DE 10 2007 030 806 A1 oder aus der WO 2009/003569 A1 bekannt. Dabei wird ein, eine Spitze und einen konischen Schaft aufweisendes Verbindungselement aus Stahl mit hoher Anpresskraft und unter Rotationsbeaufschlagung in die zu verbindenden Bauteile eingetrieben. Durch die auftretenden hohen Temperaturen erfolgt eine Reibschweißverbindung zwischen dem Verbindungselement und dem sich einstellenden Durchzug in den Bauteilen.

Das in der WO 2009/003569A1 benutzte Verbindungselement ist ein einfacher Reibnagel, dessen zylindrischer Schaft eine glatte Oberfläche aufweist, die lediglich eine Stoffschlussverbindung mit den Fügepartnern, das heißt den zu verbindenden Bauteilen, eingeht. Außerdem sind die Prozessparameter derart gewählt, dass ein Reibschweißen erfolgt, bei dem die Kontaktflächen zwischen dem Verbindungselement und den Bauteilen in einen schmelzflüssigen Zustand verbracht werden, das heißt die Bauteile und das Verbindungselement schmelzen an ihren Kontaktstellen auf. Ein derartiges Aufschmelzen ist abhängig von den verwendeten Werkstoffen mit einem hohen Energieeintrag verbunden. Entsprechend groß ist das Risiko, dass das mit hoher Andruckkraft sowie hohen Drehzahlen angetriebene Verbindungselement beim Fügevorgang deformiert wird, wodurch die Festigkeit der Bauteilverbindung beeinträchtigt werden kann.

Aufgabe der Erfindung ist es, eine Bauteilverbindung bereitzustellen, bei der mit einem reduzierten Energieeintrag sowie in prozesssicherer Weise eine Bauteilverbindung mit hoher Verbindungsfestigkeit ermöglicht ist.

Die Aufgabe ist durch die Merkmale des Patentanspruchs 1 gelöst. Vorteilhafte und besonders zweckmäßige Weiterbildungen der Erfindung sind in den Unteransprüchen angeführt.

Die Erfindung beruht auf dem Grundgedanken, die Belastung des Verbindungselements beim Fügevorgang mit Druck und Rotation zu reduzieren. Vor diesem Hintergrund wird auf ein energieaufwändiges Reibschweißen verzichtet und gemäß dem kennzeichnenden Teil des Patentanspruches 1 anstelle dessen eine Lötverbindung zwischen dem Verbindungselement und den Bauteilen vorgeschlagen, bei der ein Aufschmelzen der Kontaktbereiche zwischen dem Verbindungselement und den Bauteilwerkstoffen entbehrlich ist, zumal beim Aufschmelzen zumeist die Korrosionsschutzschicht des Verbindungselements geschädigt wird, was bei der tragenden Verbindung zu Nachteilen führt. Hierfür kann der Schaft des Verbindungselements mit einer Beschichtung aus einem Lotmaterial überzogen sein, das beim Fügevorgang zwischen den Bauteilen und dem Verbindungselement die Lötverbindung ausbildet. Die Lötverbindung führt also auch zu einem verbesserten Korrosionsschutz der Bauteilverbindung. Der Vorteil der Lotschicht besteht darin, dass diese den Durchdringungsbereich der Bauteilwerkstoffe schließt.

Mit der erfindungsgemäßen Lötverbindung ergibt sich eine kraft- und formschlüssige Verbindung, die prozesssicher herstellbar ist und verbesserte Verbindungseigenschaften verspricht. Gegebenenfalls sind aufgrund des reduzierten Energieeintrages auch reduzierte Prozesszeiten möglich. Zudem sind die Bearbeitungskräfte und die Temperaturbelastung der zu verbindenden Bauteile sowie des Verbindungselements vorteilhaft verringert. Dessen Bauvolumen und daher auch dessen Wärmeaufnahmekapazität sind vergleichsweise gering. Entsprechend groß ist bei übermäßig hohen Prozesstemperaturen, wie sie insbesondere beim Fügen höchstfester Stähle mit Rm > 800 MPa auftreten, die Gefahr einer Überhitzung des Verbindungselements.

Bei einem vollständig mit Lotmaterial überzogenen Schaft kann gegebenenfalls die Gefahr bestehen, dass beim Eindringen des Verbindungselements in die Fügeteile flüssiges Lotmaterial vom Verbindungselement seitlich weggeschleudert wird. Dies kann vermieden werden, indem das Lotmaterial nur in speziellen Teilbereichen auf den Verbindungselement-Schaft aufgetragen wird. Bevorzugt kann z.B. ausschließlich die später beschriebene umfangsseitige Riffelung am Verbindungselement-Schaft mit dem Lotmaterial überzogen sein.

Der erfindungsgemäße Fügevorgang kann mit Prozessparametern durchgeführt werden, bei denen die Schmelztemperatur der Bauteilwerkstoffe nicht erreicht wird. Bei der Lötverbindung wird lediglich die Schmelztemperatur des Lotmaterials erreicht. Eine stoffschlüssige Verbindung erfolgt insbesondere durch Diffusionsvorgänge an den Kontaktflächen zwischen dem Lotmaterial und den Bauteilen sowie dem Verbindungselement.

Die Prozeßtemperatur beim Fügevorgang wird durch Anpassung der Drehzahl und/oder der Andruckkraft des auf das Verbindungselement wirkenden Antriebsstößels des Bearbeitungswerkzeugs gesteuert. Die Prozesstemperatur kann dabei bevorzugt größer als die Schmelztemperatur des Lotmaterials sein, jedoch kleiner als die Schmelztemperatur der Bauteilwerkstoffe. Entsprechend wird insbesondere durch ein Fließen des Lotmaterials ein Stoffschluss zwischen dem Verbindungselement und zumindest einem der Bauteile hergestellt.

Beim Eintreiben des Verbindungselements in die miteinander zu verbindenden Bauteile besteht die Problematik, dass das Lotmaterial nicht in ausreichendem Maße zwischen den entstehenden Bohrungslaibungen der Bauteile und dem Verbindungselement verbleibt, sondern vielmehr aus den Bohrungslaibungen heraus verdrängt wird. Dies ist jedoch in Hinblick auf die Verbindungsfestigkeit von Nachteil. Zur Steigerung der Verbindungsfestigkeit kann das Verbindungselement zumindest einen Hinterschnitt aufweisen, in dem sich das beim Fügevorgang flüssige Lotmaterial sammeln kann. Auf diese Weise werden speziell an den Kontaktflächen zwischen dem Verbindungselement und den Bauteilen Reservoirs bereitgestellt, die zur Aufnahme von flüssigem Lötmaterial dienen. Beispielhaft kann einer dieser Hinterschnitte an der, den Bauteilen zugewandten Unterseite des Verbindungselement-Kopfes ausgebildet sein und ringförmig um den Verbindungselement-Schaft verlaufen. Das somit in größer Materialstärke an der Unterseite des Verbindungselement-Kopfes vorgesehene Lotmaterial sorgt zudem für eine zusätzliche Abdichtwirkung. Alternativ oder zusätzlich können Hinterschnitte an der Schaftoberfläche ausgebildet sein, insbesondere durch Erhöhungen und/oder Vertiefungen.

Allgemein ausgedrückt kann daher die Schaftoberfläche des Verbindungselements somit nicht durchgängig glatt, sondern abschnittsweise mit einer Oberflächenstruktur ausgeführt sein, in die das flüssige Lotmaterial hineinfließen kann. Gegebenenfalls kann durch entsprechende Steuerung der Prozessparameter zusätzlich auch eine Verschweißung der Kontaktflächen erfolgen, wodurch die Festigkeit der Bauteilverbindung weiter gesteigert ist.

Bevorzugt kann die Schaftoberfläche zumindest zwei Teilabschnitte aufweisen, von denen der erste Teilabschnitt mit den Erhöhungen und/oder Vertiefungen versehen ist. Der zweite Teilabschnitt kann im Unterschied dazu eine im Vergleich zum ersten Teilabschnitt glatte Oberflächenstruktur aufweisen. Die Erhöhungen/Vertiefungen des ersten Teilabschnittes ragen daher über die Oberflächenstruktur des zweiten Teilabschnittes hinaus bzw. sind davon zurückgesetzt.

Die erfindungsgemäße Bauteilverbindung umfasst sowohl eine Verbindung, bei der das Verbindungselement das untere Bauteil durchdringt, als auch eine Verbindung, bei der die Schaftspitze des Verbindungselements vom unteren Bauteil überdeckt bleibt.

Die Erhöhungen und Vertiefungen können in unterschiedlichen Geometrien ausgeführt sein. Bevorzugt können die Erhöhungen und Vertiefungen an dem Verbindungselement durch eine gezielte Rauhigkeit der Oberfläche des Schaftes und/oder durch ein Wellenprofil oder eine Riffelung gebildet sein, in die das im Eintreibvorgang/Fügevorgang flüssige Lotmaterial einfließen oder eindiffundieren kann und somit zuverlässig den Kraft- und Formschluss erzeugt. Dabei kann die Differenz zwischen höchsten und tiefsten Strukturmerkmalen über die Länge des Verbindungselements variieren. Im Falle einer Riffelung kann der Winkel der durch die Erhöhungen und/oder Vertiefungen gebildeten Stege zwischen 0° (achsparallel) und 90° (umlaufend) ausgeführt sein, wobei diese zudem über die Länge des Schafts unterschiedlich hoch ausgeführt sein können. Die Riffelung kann beispielhaft linienförmig, umlaufend und/oder pyramidenförmig ausgebildet sein.

Bevorzugt kann im Wesentlichen nur der Abschnitt des Schaftes des Verbindungselements Erhöhungen und/oder Vertiefungen aufweisen, der im Endstadium das tragende Bauteil der Verbindung durchragt. Dies kann bei einer noch ausreichenden Festigkeit zusätzlich einen verringerten Fertigungsaufwand und insbesondere eine weiter verkürzte Fertigungszeit ermöglichen, was bei einer Großserienfertigung einen erheblichen Kostenvorteil darstellt.

Dazu kann alternativ oder zusätzlich der das zu befestigende Bauteil durchdringende Abschnitt des Schaftes des Verbindungselementes geringfügig im Durchmesser gegenüber einem Nenndurchmesser verringert sein und in einem das Bauteil haltenden, durchmessergrößeren Kopf übergehen. Dies führt vorteilhaft zu einer Verringerung der Werkstoffspannungen in dem zu befestigenden Bauteil, wobei die Haltekräfte der Verbindung dann vermehrt über den Kopf des Verbindungselements abgestützt werden. Ein derart durchmesserreduzierter Schaftabschnitt ist auch auf ein Verbindungselement anwendbar, dessen Schaft eine durchgängig glatte Oberflächenstruktur ohne die oben erwähnten Erhöhungen/Vertiefungen aufweist. Zudem ergibt sich zwischen dem durchmesserreduzierten Schaft-Abschnitt und der Bohrungslaibung des zu befestigenden Bauteils eine Ringspalt. Während des Fügevorgangs kann das geschmolzene Lotmaterial in den Ringspalt einfließen, wodurch in diesem Bereich ausreichend Lotmaterial für eine feste Lötverbindung zwischen dem Verbindungselement und dem zu befestigenden Anbauteil vorhanden ist.

In vorteilhafter Weiterbildung der Erfindung wird ferner vorgeschlagen, dass bei einem Verbindungselement aus Stahl und zumindest dem tragenden Bauteil aus Metall das Verbindungselement am Schaft mit einer Beschichtung aus einem niedriger schmelzenden Lot überzogen ist. Die Prozessparameter (Anpressdruck, Drehzahl) können dann so ausgelegt werden, dass nur eine Prozesstemperatur im Rahmen der Liquidustemperatur des Lots (zum Beispiel ein Silberlot oder Hartlot) erreicht werden muss, um zusätzlich eine hochfeste Lötverbindung zwischen dem Verbindungselement und den Bauteilen herzustellen.

In bevorzugter, weiterer Ausgestaltung der Erfindung kann das Werkzeug zur Herstellung der Verbindung einen auf das zumindest eine zu verbindende Bauteil aufsetzbaren Niederhalter aufweisen. Innerhalb des Niederhalters ist das Verbindungselement angeordnet und über einen antreibbaren Stößel in Axialrichtung und Rotationsrichtung beaufschlagbar. Der Niederhalter gewährleistet prozesssichere Verfahrensabläufe und trägt dazu bei, dass die beim Eintreiben des Verbindungselements sich ausbildenden Auskragungen und Durchzüge gezielt ausgeformt und unerwünschte Verzüge vermieden werden.

In einer bevorzugten Bauteilverbindung sind die beiden Fügepartner ein hochfestes tragendes Stahlblechteil sowie ein daran zu befestigendes Aluminiumblechteil. Die beim Fügevorgang entstehende steife Materialauskragung des Stahlblechteiles verdrängt dabei das weiche Aluminiummaterial des Aluminium-Blechteils derart, dass sich die steife Materialauskragung zwischen den Durchzug des Aluminium-Blechteils und dem Verbindungselement-Schaft hinein verlagert. Dadurch wird die Formschlussverbindung zwischen den beiden Bauteilen beträchtlich erhöht. Eine derartige Formschlussverbindung zwischen der Materialauskragung des tragenden Bauteils und dem Durchzug des daran zu befestigenden Bauteils ist generell auch bei anderen Material-Kombination ermöglicht.

In vorteilhafter, weiterer Ausgestaltung der Erfindung können der axiale Anpressdruck auf das Verbindungselement und dessen Drehzahl über das eingesetzte Werkzeug variabel gesteuert sein. Damit gelingt es, die Prozessparameter und insbesondere die Prozesstemperaturen vorteilhaft so zu steuern, dass die angestrebten Verbindungseigenschaften prozesssicher erreicht werden. Dabei kann mit zunehmendem Eindringen des Verbindungselements in die Bauteile die Drehzahl des Verbindungselements erhöht und gegebenenfalls der maximale Anpressdruck (F_{A} zum Beispiel 5 kN) vermindert werden. Bei mehreren, mit einem tragenden Bauteil zu verbindenden Lagen von Bauteilen können mehrere, variable Drehzahlen und Anpressdrücke sowie Eintreibimpulse zeitlich hintereinander gesteuert sein. Die Eintreibimpulse im Millisekundenbereich können dabei ein Mehrfaches des vorstehenden Anpressdruckes betragen. Vorteilhaft ist es ferner, wenn das Verbindungselement mit einer Anfangsdrehzahl von zumindest 2000 1/min und einer Enddrehzahl von zumindest 3500 1/min angetrieben wird.

Die erfindungsgemäße Bauteil-Verbindung umfasst sowohl eine Verbindung, bei der das Verbindungselement das untere Bauteil durchdringt, als auch eine Verbindung, bei der die Schaftspitze des Verbindungselements vom unteren Bauteil überdeckt bleibt, d.h. das untere Bauteil nicht durchdringt.

Zur Unterstützung des Fügevorgangs können die zu verbindenden Bauteile auf einer Matrize abgestützt sein, die dem Niederhalter gegenüberliegt und ggf. die Kontur des durch das Verbindungselement erzeugten Durchzugs beeinflussen kann. Es versteht sich, dass eine Matrize nur bei beidseitiger Zugänglichkeit der zu verbindenden Bauteile (zum Beispiel Platten und/oder Bleche) verwendbar ist.

In einer möglichen, vorteilhaften Ausführungsvariante der Erfindung kann zusätzlich zwischen den aneinanderliegenden Flächen der zu verbindenden Bauteile ein Klebstoff eingebracht sein.Der Klebstoff wird beim anschließenden Ofendurchlauf im KTL-Prozess ausgehärtet. Die Festigkeit der Verbindung kann somit bei geringem Mehraufwand zusätzlich gesteigert werden. Der Klebstoff ist ein wärmeaushärtender Klebstoff. Gemäß einer Prozessvariante erfolgt mit der Lötverbindung zunächst eine Fixierung der Fügeteile bis zur späteren Klebstoffwarmaushärtung.

Mehrere Ausführungsbeispiele der Erfindung sind im Folgenden anhand der beiliegenden, schematischen Zeichnung näher erläutert. Es zeigen:
- Fig. 1: in einem Längsschnitt eine Bauteilverbindung zweier aneinander anliegender Bauteile mittels eines stiftförmigen Verbindungselements, das über ein Werkzeug selbstbohrend in die Bauteile eingetrieben und in diesen verankert ist;
- Fig. 2: in einer vergrößerten Teilansicht die Bauteilverbindung aus der Fig. 1;
- Fig. 3: ein Verbindungselement vor dem Fügevorgang sowie in Alleinstellung;
- Fig. 4: eine schematische Ansicht eines Bearbeitungswerkzeugs, anhand der der Fügevorgang veranschaulicht ist; und
- Fig. 5: in einer Ansicht entsprechend der Fig. 1 eine Bauteilverbindung gemäß einem zweiten Ausführungsbeispiel.

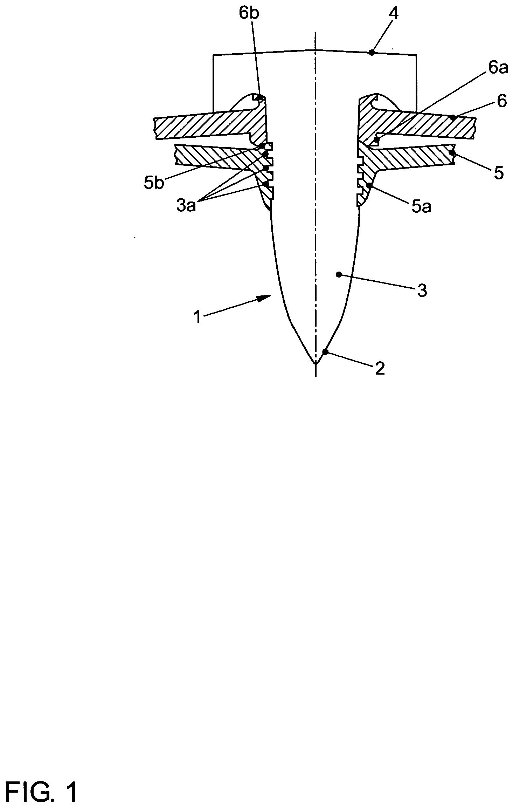

In der Fig. 1 ist mit 1 ein stiftförmiges, rotationssymmetrisches Verbindungselement aus Stahl bezeichnet, das sich im Wesentlichen aus einer Spitze 2, einem Schaft 3 und einem durchmessergrößeren Kopf 4 zusammensetzt.
Das Verbindungselement 1 ist zur festen Verbindung zweier flächiger, aneinander anliegender Bauteile 5, 6 (zum Beispiel Platten oder Bleche aus Metall oder teilweise Kunststoff) in diese eingetrieben, wobei sich neben den entsprechenden Bohrungslaibungen durch die Materialverdrängungen nach unten ringförmige Durchzüge 5a, 6a und nach oben ringförmige Auskragungen 5b, 6b ausbilden. Entsprechend erstrecken sich die Durchzüge 5a, 6a in der Fügerichtung des Verbindungselements und die Auskragungen 5b, 6b entgegen der Fügerichtung.
Beispielhaft kann das untere, tragende Bauteil 5 ein hochfestes Stahlblechteil sein, während das obere, zu befestigende Bauteil 6 ein weiches Aluminiumblechteil sein kann. Die beim Fügevorgang entstehende steife Materialauskragung 5b des unteren Bauteils 5 verdrängt gemäß der Fig. 1 das weiche Aluminiummaterial des Bauteils 6 derart, dass sich die steife Materialauskragung 5b zwischen dem Durchzug 6a des oberen Bauteils 6 und dem Verbindungselement-Schaft 3 hinein verlagert.
Die Spitze 2 des Verbindungselements 1 ist - wie aus Fig. 1 ersichtlich ist - durch mehrere Abschnitte (ohne Bezugszeichen) mit zunächst größerem und dann abnehmendem Konuswinkel so ausgeführt, dass sie im Wesentlichen ohne Zerstörung die flächigen Bauteile 5, 6 entsprechend aufweiten kann. Die Spitze 2 kann gehärtet oder mit einer Hartmetallkappe versehen sein. Die Spitze 2 geht in den durchmessergrößeren Schaft 3 über, der zylindrisch oder wie im Ausführungsbeispiel leicht konisch mit zum Kopf 4 hin zunehmendem Durchmesser ausgeführt ist.

Der Schaft 3 weist gemäß der Erfindung im Bereich des unteren Bauteiles 5 mehrere Erhöhungen und Vertiefungen (einheitlich mit 3a bezeichnet) auf, die als umlaufende Riffelung beziehungsweise Wellenprofil eingearbeitet sind (dies ist in der Fig. 1 übertrieben dargestellt). Der Winkel der durch die Riffelung gebildeten, umlaufenden Stege 3a beträgt 90° zur Mittelachse des Verbindungselements 1, er kann aber auch 0° (achsparallel) oder dazwischenliegend schräg ausgeführt sein.

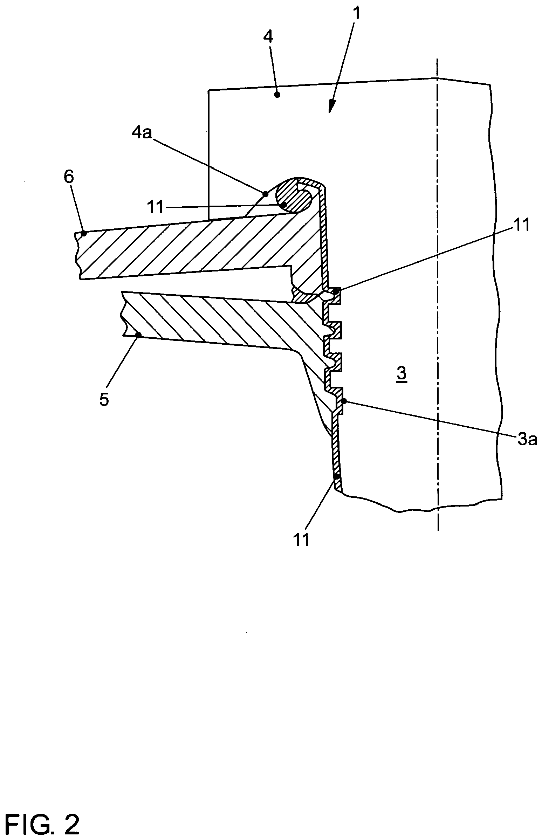

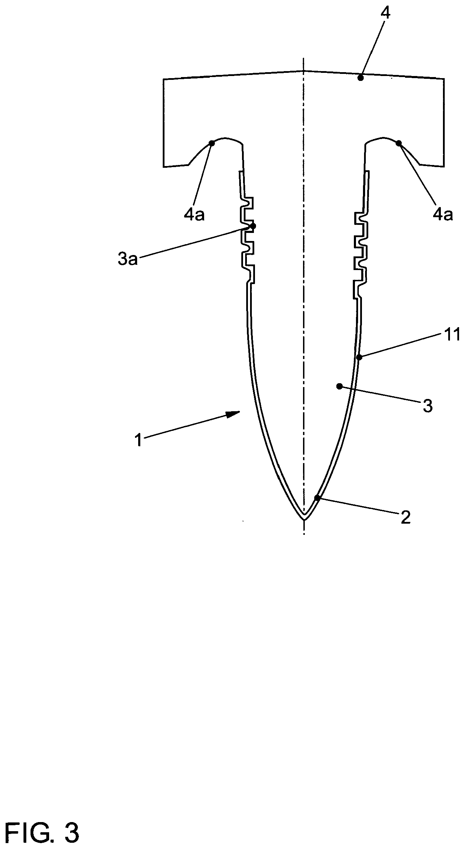

Die Erhöhungen und/oder Vertiefungen 3a können auch über die gesamte Länge des Schaftes 3 aufgebracht und/oder Vertiefungen 3a können auch über die gesamte Länge des Schaftes 3 aufgebracht sein.
Der Schaft 3 des Verbindungselements 1 geht in den durchmessergrößeren Kopf 4 über, wobei an dessen Auflagefläche am oberen Bauteil 6 ein ringförmiger Hinterschnitt 4a eingearbeitet ist, der wie ersichtlich ist die Auskragung 6b des Bauteils 6 aufnimmt.
Das Verbindungselement sowie die Bauteile 5, 6 sind zueinander nicht in Reibschweißverbindung, sondern in einer Lötverbindung, die durch das in der Fig. 2 gezeigte Lotmaterial 11 hergestellt ist, das aus Gründen der Übersichtlichkeit in den Fig. 1, 4 und 5 weggelassen ist. Das Lotmaterial 11 wird vor dem Fügevorgang auf den Schaft 3 des Verbindungselementes 1 beschichtet, wie es in der Fig. 3 gezeigt ist. Wie später noch beschrieben ist, sind beim Fügevorgang die Prozessparameter derart gewählt, dass das Lotmaterial 11 schmilzt und in den ringförmigen Hinterschnitt 4a an der Unterseite des Verbindungselement-Kopfes 4 sowie in die durch die Erhöhungen/Vertiefungen 3a gebildeten Hinterschnitte am Schaft 3 einfließen kann. Auf diese Weise ist speziell an der Kopf-Unterseite sowie am Außenumfang des Verbindungselement-Schafts 3 ausreichend Lotmaterial 11 vorgesehen, um eine feste Lötverbindung zu gewährleisten. Demnach wirken insbesondere die zwischen den Erhöhungen/Vertiefungen 3a gebildeten taschenförmigen Hinterschnitte als Materialreservoir, in dem sich das flüssige Lotmaterial 11 beim Eintreiben des Verbindungselementes 1 sammeln kann, ohne aus den Bohrungslaibungen der Bauteile 5, 6 verdrängt zu werden.
Beim Eintreiben des Verbindungselements 1 (wird nachstehend beschrieben) in die Bauteile 5, 6 entsteht im Verbindungsbereich durch die Reibungskräfte eine hohe Temperatur, die u.a. bewirkt, dass die Bauteilwerkstoffe verdrängt und in die Hinterschnitte 4a, 3a des Verbindungselements 1 verlagert werden. Dadurch ergibt sich eine Formschlussverbindung. Zudem wird das Lotmaterial 11 verflüssigt und kann in die Hinterschnitte 3a, 4a einfließen sowie in die Kontaktflächen der Bauteile 5, 6 und des Verbindungselements 1 eindiffundieren. Die somit gebildete Stoffschlussverbindung erhöht die Festigkeit der Bauteilverbindung wesentlich.
Das Verbindungselement 1 kann im Bereich des Schaftes 3 mit einer Beschichtung aus einem niedriger als Stahl schmelzenden Lot, zum Beispiel einem Hartlot, versehen sein. Die Schmelztemperatur des Lots liegt unterhalb der Schmelztemperatur von Stahl, so dass das Lot bei den auftretenden Prozesstemperaturen bzw. beim Eintreiben der Verbindungselements 1 eine Lötverbindung bzw. zusätzlich einen Stoffschluss zwischen dem Verbindungselement und den Bauteilen 5, 6 oder nur dem Bauteil 5 herstellt.
Die Prozesstemperaturen können beim Eintreiben des Verbindungselements 1 so hoch gesteuert werden, dass zusätzlich zur Lötverbindung eine Reibschweißverbindung (wie an sich bekannt) zwischen dem Verbindungselement 1 und den Bauteilen 5 und gegebenenfalls 6 auftritt.

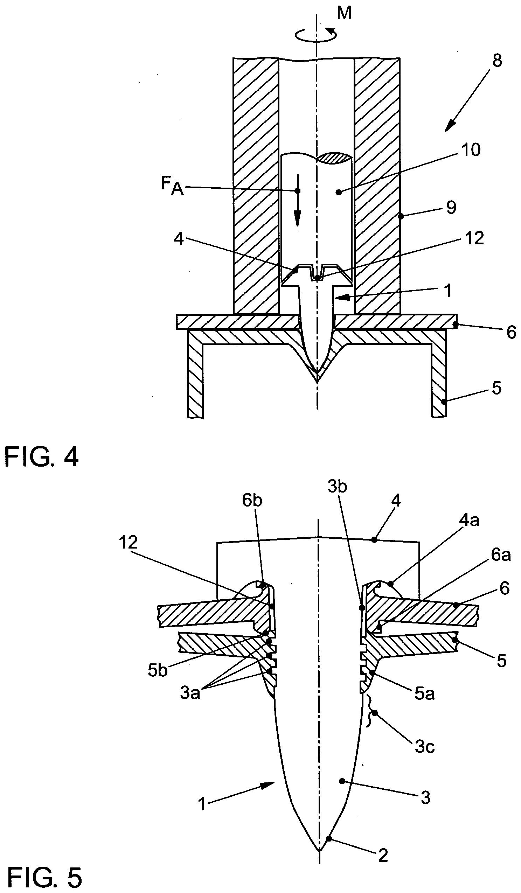

Die Fig. 5 zeigt ein modifiziertes Verbindungselement 1, das nur soweit beschrieben ist, als es sich wesentlich von dem Verbindungselement 1 gemäß Fig. 1 unterscheidet. Funktionell gleiche Teile sind mit gleichen Bezugszeichen versehen.
Das in der Fig. 5 gezeigte Verbindungselement 1 weist eine im Vergleich zur Fig. 1 unterschiedliche Schaftgeometrie auf. So geht in der Fig. 2 der Kopf 4 des Verbindungselementes 1 im axialen Verlauf nach unten zunächst in einen ersten Zylinderabschnitt 3b über, an dem sich die Riffelung 3a anschließt. Im weiteren axialen Verlauf nach unten folgt ein zweiter Zylinderabschnitt 3c, der in die konusförmige Schaftspitze 2 übergeht. Der Durchmesser des oberen, ersten Zylinderabschnittes 3b ist im Vergleich zum Durchmesser des zweiten Zylinderabschnittes 3c reduziert.
Der durchmesserreduzierte Abschnitt 3b bewirkt, dass nach dem Eintreiben des Verbindungselements 1 in die Bauteile 5, 6 ein geringer Umfangsspalt 12 zur Bohrungslaibung des Bauteils 6 entsteht, der während des Fügevorgangs die Werkstoffspannungen und die Temperaturbelastung in diesem Bereich 6a, 6b vermindert. Die in Axialrichtung wirkenden Haltekräfte werden verstärkt über den Kopf 4 ausgeübt. Während des Fügevorgangs fließt das flüssige Lotmaterial 11 in den Umfangsspalt 12 ein, wodurch ausreichend Lotmaterial 11 zwischen der Bohrungslaibung des Bauteils 6 und dem Verbindungselement-Schaft 3 vorhanden ist.
Die Fig. 4 zeigt nur grob schematisch ein Bearbeitungswerkzeug 8 zum Eintreiben des Verbindungselements 1 in die zu verbindenden Bauteile 5, 6.
Das Werkzeug 8 weist u.a. einen absenkbaren Niederhalter 9 auf, innerhalb den das Verbindungselement 1 einsetzbar ist. Ein in dem Niederhalter 9 verdrehbarer und axial verschiebbarer Stößel 10 ist über eine Formschlussverbindung mit dem Kopf 4 des Verbindungselements 1 verbunden, so dass das Verbindungselement 1 hydraulisch, pneumatisch oder elektromotorisch (nicht dargestellt) mit einer Anpresskraft F_{A} axial beaufschlagbar und über einen Drehantrieb mit einem Drehmoment M betreibbar ist.

Nach dem Positionieren und Justieren der Bauteile 5, 6 und des Bearbeitungswerkzeugs 8 wird der Niederhalter 9 gegen die Bauteile 5, 6 gefahren. Der Stößel 10 treibt mit zunächst einer Drehzahl n von ca. 2000 1/min das Verbindungselement 1 an und übt eine Anpresskraft F_{A} aus, die zunächst eine Erwärmung des oberen Bauteiles 6 bewirkt. Eine zusätzliche Temperaturbeaufschlagung könnte über das Bearbeitungswerkzeug 8 erzeugt werden, zum Beispiel über integrierte, elektrische Induktivspulen.

Durch kurzfristige, massive Erhöhung der Anpresskraft F_{A} im Millisekundenbereich wird sodann ein Eintreibimpuls gesteuert, der das Eindringen der Spitze 2 des Verbindungselements 1 einleitet.

Über eine Erhöhung der Drehzahl des Verbindungselements 1 bei gleichzeitigem, axialen Vorschub wird das Eintreiben und die dabei auftretende Prozesstemperatur so gesteuert, dass durch mehr oder weniger starke Reibbelastung die gewünschten Prozessparameter bzw. Verbindungseigenschaften erzeugt werden.

Die Enddrehzahl des Verbindungselements 1 beträgt bevorzugt ca. 3500 1/min, bevor bei erreichter Endtemperatur der Bauteile 5, 6 und mit dem Kopf 4 am Bauteil 6 aufsitzendem Verbindungselement 1 der Bearbeitungsprozess beendet ist.

Anstelle nur eines zu verbindenden Bauteils 6 können auch mehrere Lagen von Bauteilen 6 mit dem tragenden Bauteil 5 wie vorbeschrieben über das Verbindungselement 1 befestigt werden. Die Steuerung der Anpresskräfte F_{A} und der Drehzahlen im Bearbeitungswerkzeug 8 kann daran angepasst erfolgen. Insbesondere können gegebenenfalls mehrere Eintreibimpulse mit kurzfristig erhöhtem Anpressdruck F_{A} gesteuert werden, die jeweils pro Bauteil 6 einem beginnenden Eintreiben des Verbindungselements 1 entsprechen.

### Bezugszeichenliste

- 1: Verbindungselement
- 2: Spitze
- 3: Schaft
- 3a: Erhöhungen und Vertiefungen
- 3b: durchmesserreduzierter Abschnitt
- 3c: Zylinderabschnitt
- 4: Kopf
- 4a: ringförmiger Hinterschnitt
- 5: Bauteil
- 5a: Durchzug
- 5b: Auskragung
- 6: Bauteil
- 6a: Durchzug
- 6b: Auskragung
- 8: Bearbeitungswerkzeug
- 9: Niederhalter
- 10: Stößel
- 11: Lotmaterial
- 12: Umfangsspalt
- 13: Formschlussverbindung
- F_{A}: Anpresskraft
- M: Drehmoment

## Patentansprüche

1. Verbindung umfassend ein stiftförmiges Verbindungselement (1) mit einem Schaft (3), der mit in eine Spitze (2) übergeht und einen ausgeweiteten Kopf (4) zum Eintreiben des Verbindungselementes (1) unter Druck- und Rotationsbeaufschlagung aufweist, und zumindest zwei aneinander anliegender Bauteile (5, 6), die mittels des stiftförmigen Verbindungselements (1) verbunden sind, wobei die feste Verbindung über Reibungserhitzen und lokale Verformung der Bauteilwerkstoffe erzeugt ist, **dadurch gekennzeichnet, dass** der Schaft (3) zumindest in Teilbereichen mit einer Beschichtung aus einem Lotmaterial (11) überzogen ist, das zwischen den Bauteilen (5, 6) und dem Verbindungselement (1) eine Lötverbindung bildet, wobei das Verbindungselement (1) mit zumindest einem Hinterschnitt (3a, 4a) zur Aufnahme von Lotmaterial (11) ausgebildet ist, wobei der am Schaft (3) ausgebildete Hinterschnitt (3a) aus einer Vielzahl von Erhöhungen und Vertiefungen, vorzugsweise in Form einer Riffelung gebildet ist.

2. Verbindung nach Anspruch 1, **dadurch gekennzeichnet, dass** der Schmelzpunkt des Lotmaterials (11) geringer ist als der Schmelzpunkt der Bauteilwerkstoffe und des Verbindungselements (1) oder bei Werkstoff-Kombinationen mit z.B. Kunststoff geringer ist als der Schmelzpunkt der untersten Bauteillage und des Verbindungselements (1).

3. Verbindung nach Anspruch 1 oder 2, **dadurch gekennzeichnet, dass** die Prozesstemperatur beim Fügevorgang durch Variieren der Drehzahl und/oder der Andruckkraft (n, F_{A}), mit der das Verbindungselement (1) beaufschlagbar ist, anpassbar ist, und/oder dass die Prozesstemperatur größer als der Schmelztemperatur des Lotmaterials, jedoch kleiner als die Schmelztemperatur der Bauteilwerkstoffe ist, wobei insbesondere durch ein Fließen des Lotmaterials ein Stoffschluß zwischen dem Verbindungselement (1) und zumindest einem der Bauteile (5, 6) herstellbar ist.

4. Verbindung nach Anspruch 1, **dadurch gekennzeichnet, dass** das der Hinterschnitt (4a) an der, den Bauteilen (5, 6) zugewandten Unterseite des Verbindungselement-Kopfes (4) ausgebildet ist und insbesondere ringförmig um den Schaft (3) verläuft.

5. Verbindung nach Anspruch 1, **dadurch gekennzeichnet, dass** der Hinterschnitt (3a) an der Schaft-Oberfläche ausgebildet ist.

6. Verbindung nach Anspruch 5, **dadurch gekennzeichnet, dass** die Schaft-Oberfläche zumindest zwei Teilabschnitte aufweist, von denen der erste Teilabschnitt (3a) mit den Erhöhungen und Vertiefungen versehen ist und der zweite Teilabschnitt (3b, 3c) mit einer im Vergleich zum ersten Teilabschnitt (3a) glatten Oberflächenstruktur versehen ist.

7. Verbindung nach einem der vorhergehenden Ansprüche, **dadurch gekennzeichnet, dass** der das zu befestigende Bauteil (6) durchdringende Abschnitt (3b) des Schaftes (3) des Verbindungselementes (1) unter Bildung eines Ringspalts (12) im Durchmesser verringert ist und in einen das Bauteil (6) haltenden, durchmessergrößeren Kopf (4) übergeht, und dass insbesondere der Ringspalt (12) Lotmaterial (11) aufnehmen kann.

8. Verbindung nach einem der vorhergehenden Ansprüche, **dadurch gekennzeichnet, dass** im Wesentlichen nur der Abschnitt des Schaftes (3) des Verbindungselements (1) Erhöhungen und Vertiefungen (3a) aufweist, der das tragende Bauteil (5) der Verbindung durchragt.

9. Verbindung nach einem der vorhergehenden Ansprüche, **dadurch gekennzeichnet, dass** das Verbindungselement (1) aus Stahl und zumindest das tragende Bauteil (5) aus Metall gefertigt ist.

## Claims

1. Connection comprising a pin-like connecting element (1) with a stem (3) which merges into a point (2) and a widened head (4) for the driving in of the connecting element (1) under action of pressure and of rotation, and at least two components (5, 6) which rest against each other and are connected by means of the pin-like connecting element (1), wherein the fixed connection is produced via friction heating and local deformation of the component materials, **characterized in that** the stem (3) is coated at least in partial regions with a coating made from a soldering material (11) which forms a soldered joint between the components (5, 6) and the connecting element (1), wherein the connecting element (1) is designed with at least one undercut (3a, 4a) for receiving soldering material (11), wherein the undercut (3a) which is formed on the stem (3) is formed from a multiplicity of elevations and depressions, preferably in the form of ribbing.

2. Connection according to Claim 1, **characterized in that** the melting point of the soldering material (11) is lower than the melting point of the component materials and of the connecting element (1) or, in the event of material combinations with, for example, plastic, is lower than the melting point of the lowermost component layer and of the connecting element (1).

3. Connection according to Claim 1 or 2, **characterized in that**, during the joining operation, the process temperature is adaptable by varying the rotational speed and/or the contact pressure force (n, F_{A}) with which the connecting element (1) can be acted upon, and/or **in that** the process temperature is greater than the melting point of the soldering material, but lower than the melting point of the component materials, wherein an integrally bonded connection can be produced between the connecting element (1) and at least one of the components (5, 6) in particular by means of flowing of the soldering material.

4. Connection according to Claim 1, **characterized in that** the undercut (4a) is formed on the lower side of the connecting element head (4), said lower side facing the components (5, 6), and in particular runs annularly around the stem (3).

5. Connection according to Claim 1, **characterized in that** the undercut (3a) is formed on the stem surface.

6. Connection according to Claim 5, **characterized in that** the stem surface has at least two subsections, of which the first subsection (3a) is provided with the elevations and depressions, and the second subsection (3b, 3c) is provided with a surface structure which is smooth in comparison to the first subsection (3a).

7. Connection according to one of the preceding claims, **characterized in that** that section (3b) of the stem (3) of the connecting element (1) which penetrates the component (6) to be fastened is reduced in diameter, forming an annular gap (12), and merges into a head (4) which has a larger diameter and holds the component (6), and **in that** in particular the annular gap (12) can receive soldering material (11).

8. Connection according to one of the preceding claims, **characterized in that** substantially only that section of the stem (3) of the connecting element (1) which projects through the supporting component (5) of the connection has elevations and depressions (3a).

9. Connection according to one of the preceding claims, **characterized in that** the connecting element (1) is manufactured from steel and at least the supporting component (5) is manufactured from metal.

## Revendications

1. Raccord avec un élément de jonction (1) en forme de tige comprenant un manche (3), lequel se prolonge dans une pointe (2) et lequel présente une tête (4) élargie en vue de faire pénétrer l'élément de jonction (1) sous l'effet d'une contrainte de pression et de rotation, ainsi qu'avec tout au moins deux éléments de structure (5, 6), lesquels sont disposés l'un contre l'autre et lesquels sont reliés au moyen de l'élément de jonction (1) en forme de tige ;
dans lequel le raccord fixe est produit par un échauffement par friction et par une déformation locale des matériaux qui constituent les éléments de structure ;
**caractérisé en ce que** le manche (3) est enrobé, tout au moins dans des zones partielles, d'un revêtement constitué d'une matière de brasure (11), laquelle forme une jonction par brasage entre les éléments de structure (5, 6) et l'élément de jonction (1) ;
**caractérisé en ce que** l'élément de jonction (1) est conçu avec tout au moins une contre-dépouille (3a, 4a) en vue de la réception de la matière de brasure (11) ; dans lequel la contre-dépouille (3a) conçue au niveau du manche (3) est formée d'une pluralité de crêtes et de creux qui, de préférence, se présentent sous la forme d'une cannelure.

2. Raccord selon la revendication 1, **caractérisé en ce que** le point de fusion de la matière de brasure (11) est inférieur au point de fusion de l'élément de jonction (1) et des matériaux qui constituent les éléments de structure ou, en cas de combinaisons de matières, telles que par exemple avec du plastique, est inférieur au point de fusion de l'élément de jonction (1) et de la position la plus basse de l'élément de structure.

3. Raccord selon la revendication 1 ou 2, **caractérisé en ce que** la température de processus peut être ajustée lors de la phase de jonction en faisant varier la vitesse de rotation et/ou la force de pression (n, F_{A}) à laquelle ou auxquelles peut être soumis l'élément de jonction (1) ; et/ou
caractérisé en ce la température de processus est supérieure à la température de fusion de la matière de brasure, mais est toutefois inférieure à la température de fusion des matériaux qui constituent les éléments de structure ;
dans lequel, en particulier, un assemblage par adhérence de matières peut être réalisé entre l'élément de jonction (1) et tout au moins l'un des éléments de structure (5, 6), par l'intermédiaire d'un écoulement de la matière de brasure.

4. Raccord selon la revendication 1, **caractérisé en ce que** la contre-dépouille (4a) est conçue au niveau de la face inférieure de la tête (4) de l'élément de jonction, laquelle face inférieure est orientée vers les éléments de structure (5, 6), et court en particulier de manière circulaire autour du manche (3).

5. Raccord selon la revendication 1, **caractérisé en ce que** la contre-dépouille (3a) est conçue au niveau de la surface du manche.

6. Raccord selon la revendication 5, **caractérisé en ce que** la surface du manche présente tout au moins deux sections partielles, parmi lesquelles la première section partielle (3a) est pourvue de crêtes et de creux et la deuxième section partielle (3b, 3c) est pourvue d'une structure de surface qui est lisse par rapport à la première section partielle (3a).

7. Raccord selon l'une des revendications précédentes, **caractérisé en ce que** la section (3b) du manche (3) de l'élément de jonction (1), laquelle section traverse l'élément de structure (6) devant être fixé, est réduite en diamètre pour donner lieu à la formation d'une fente circulaire (12) et se prolonge dans une tête (4) de plus grand diamètre qui maintient l'élément de structure (6) en place ; et
**caractérisé en ce que** la fente circulaire peut recevoir, en particulier (12), la matière de brasure (11).

8. Raccord selon l'une des revendications précédentes, **caractérisé en ce que**, pour l'essentiel, la seule section du manche (3) de l'élément de jonction (1) qui présente des crêtes et des creux (3a) est la section qui traverse l'élément de structure (5) porteur du raccord.

9. Raccord selon l'une des revendications précédentes, **caractérisé en ce que** l'élément de jonction (1) est fabriqué en acier et tout au moins l'élément de structure (5) porteur est fabriqué en métal.
